# EUROPÄISCHE PATENTSCHRIFT

(11) **EP 3 510 858 B1**
(45) Veröffentlichungstag und Bekanntmachung des Hinweises auf die Patenterteilung: **23.08.2023**
(21) Anmeldenummer: 19151253.2
(22) Anmeldetag: 10.01.2019
(51) Int. Cl.: A01G 23/099, F16B 1/00, F16B 15/02, A01G 18/50, A01N 25/34, A01K 67/033

(54) **NAGEL, VERWENDUNG EINES NAGELS UND VERFAHREN ZUM EINBRINGEN VON GEGENSTÄNDEN IN EINEN KÖRPER**
NAIL, USE OF A NAIL AND METHOD FOR INTRODUCING OBJECTS INTO A BODY
CLOU, UTILISATION D'UN CLOU ET PROCÉDÉ D'INTRODUCTION D'OBJETS DANS UN CORPS

(30) Priorität: 12.01.2018 DE 102018000182
(43) Veröffentlichungstag der Anmeldung: 17.07.2019
(73) Patentinhaber: Raimund Beck Nageltechnik GmbH, 5270 Mauerkirchen (AT)
(72) Erfinder: Dr. Korte, Hans, 23966 Wismar (DE); Siemers, Stefan, 84489 Burghausen (DE)
(74) Vertreter: Paul & Albrecht Patentanwälte PartG mbB

(56) Entgegenhaltungen:
- EP-A1- 1 275 949
- CN-B- 101 737 389
- DE-A1-102015 107 371
- DE-A1-102015 226 113
- DE-A1-102016 007 093
- GB-A- 2 517 172
- KR-A- 20070 092 374
- US-A1- 2012 134 388
- US-A1- 2015 310 323
- US-A1- 2017 262 671

## Beschreibung

Die Erfindung betrifft einen Nagel zum Einbringen von Gegenständen, Substanzen oder dergleichen in einen Körper mit einem Nagelkörper, der einen Schaft und eine Spitze umfasst, die an einem Ende des Schaftes ausgebildet ist, wobei der Nagelkörper mindestens einen, insbesondere genau einen Hohlraum zur Unterbringung von mindestens einem Sensor aufweist, wobei der Nagelkörper überwiegend oder vollständig aus verholztem Pflanzenmaterial besteht und so ausgebildet ist, dass er zum Eintreiben in einen Körper mittels eines Setzgerätes, insbesondere eines Druckluftnaglers, geeignet ist. Ferner betrifft die Erfindung ein Verfahren zum Einbringen von Gegenständen, Substanzen oder dergleichen in einen Körper.

Nägel gehören zu den ältesten bekannten Verbindungsmitteln in der Konstruktionstechnik wie Hausbau, Schiffbau, Rüstungstechnik etc., meist im Zusammenhang mit dem Werkstoff Holz. Zu unterscheiden ist schon früh zwischen steifen und harten Nägeln aus Metall, zumeist Eisen/Stahl, die direkt mittels Hämmern ins Holz eingeschlagen werden und Holznägeln, die häufig eine Bohrung benötigen, in die sie eingebracht werden, um zwei oder mehrere Bauteile miteinander zu verbinden.

An genagelte, bewegliche Holzprodukte werden zunehmend steigende Anforderungen im Hinblick auf deren Identifizierbarkeit und Rückverfolgbarkeit gestellt. Beispielsweise werden Holzkisten oder Holzpaletten im internationalen Warenverkehr häufig als Verpackungsmaterial für verschiedene Produkte eingesetzt. Logistiksysteme mit einer wachsenden Komplexität machen es erforderlich, verfolgen zu können, wo sich eine solche Holzkiste oder Holzpalette gerade befindet und welchen Weg sie in der Vergangenheit schon zurückgelegt hat. Eine Rolle spielen dabei auch zunehmende staatliche Regulierungen, die es erforderlich machen, die Herkunft von Holzprodukten lückenlos nachverfolgen zu können, einerseits vor dem Hintergrund, dass feststellbar sein muss, inwieweit ein Holzprodukt chemisch behandelt wurde und welche Gefahren durch die Behandlung oder Nicht-Behandlung für die Umgebung ausgehen können, andererseits spielt ebenfalls eine wichtige Rolle, dass die Bestände bestimmter Baumarten nicht gefährdet werden dürfen.

Um dieser Problematik Rechnung zu tragen, werden Holzprodukte häufig mit Objekten zu deren Identifizierung versehen. Neben chemischen Markersubstanzen kann es sich dabei auch um Möglichkeiten der Identifizierung mithilfe elektromagnetischer Wellen, wie z.B. RFID-Transponder handeln. Dies ermöglicht es, beim Umladen von Holzkisten oder Holzpaletten diese eindeutig zu identifizieren und die aktuelle Position mithilfe von Logistiksystemen jederzeit abrufen zu können.

Ein anderer Bereich, wo Objekte zur Identifizierung von Holz eingesetzt werden, liegt bei der forstwirtschaftlichen Holzgewinnung. Es findet zunehmende Verbreitung, frisch gefällte Baumstämme nicht mehr mit Farbe zu beschriften, sondern einen RFID-Transponder einzuschlagen, um sie später eindeutig identifizieren zu können. Der Vorteil eines solchen RFID-Transponders liegt darin, dass er - wenn er in den Baumstamm eingeschlagen ist - nicht verloren gehen kann, anders als die Farbe, die abgewaschen oder mit Schmutz überlagert werden kann. Des Weiteren ermöglicht er eine einfachere Datenverarbeitung, da Daten automatisch in ein EDV-System übertragen werden können.

Zum Einbringen eines RFID-Transponders in einen gefällten Baumstamm sind spezielle Nägel kommerziell erhältlich, in die ein solcher Transponder bereits eingebettet ist. Weniger eingesetzt werden dafür metallische Nägel, da diese die Signalübertragung zu und von dem Transponder stören und darüber hinaus die Weiterverarbeitung des Holzes erschweren, da die Gefahr besteht, dass Holzbearbeitungswerkzeuge wie beispielsweise Sägewerkzeuge in Kontakt mit dem Metallnagel kommen und dabei beschädigt werden. Eine andere kommerziell verfügbare Möglichkeit besteht darin, einen RFID-Transponder in glasfaserverstärkte Kunststoffnägel einzubetten. Neben der ökologisch unvorteilhaften Herstellung von glasfaserverstärkten Kunststoffen besteht auch hier das Problem, dass beispielsweise beim Einbringen eines solchen Nagels in einen Baumstamm Holzbearbeitungswerkzeuge mit diesem in Kontakt kommen und einem erhöhten Verschleiß unterworfen werden.

Der moderne Waldbau steht ferner vor der Problematik, dass durch zunehmende Trockenperioden in Folge des Klimawandels die Gefahr von Waldbränden erheblich zunimmt und gerade bei größeren zusammenhängenden Waldgebieten ein längerer Zeitraum zwischen dem Ausbruch eines Waldbrandes und dessen Erkennen und somit dessen Bekämpfung liegen kann. Des Weiteren besteht zunehmend das Bedürfnis, kontinuierlich die Umgebungsbedingungen eines Baumbestandes zu überwachen, um daraus Rückschlüsse auf die Wachstumsbedingungen und somit auf die Holzqualität zu ermöglichen. Hierzu werden üblicherweise Sensoren in den zu überwachenden Waldgebieten positioniert.

Eine alternative Nutzung von Baumstämmen dient der Gewinnung von auf Holz wachsenden Speisepilzen, wie z.B. Shiitake-Pilzen oder Austernseitlingen. Dazu wird zunächst Pilzmyzel auf Kulturmedien angezogen und dann auf Holzdübel übertragen, mit denen die Baumstämme beimpft werden. Die Holzdübel werden in Bohrlöcher von Laubholzstämmen, beispielsweise Eichenholzstämmen, die als Nährsubstrat dienen, gesteckt. Aus diesen Laubholzstämmen wachsen die zu erntenden Fruchtkörper. Bisher ist es erforderlich, Löcher in die Laubholzstämme zu bohren und anschließend die beimpften Holzdübel manuell einzusetzen.

Die DD 217 466 A1 schlägt eine Vorrichtung für das Einbringen von Chemikalien in Holz vor. Diese Vorrichtung ist als Hohlnagel ausgebildet und weist einen Schaft mit einem Hohlraum auf, der radialen Öffnungen besitzt. Des Weiteren umfasst der Hohlnagel einen Verschlussdeckel. Es ist vorgesehen, den Hohlnagel nach seiner Einbringung in das Holz mit der entsprechenden Chemikalie zu füllen und mit dem Deckel zu verschließen. Durch die radialen Öffnungen können die Chemikalien sukzessive an den Baumstamm abgegeben werden. Nachteilig ist hierbei, neben der manuellen Befüllung mit Chemikalien und dem Verschließen des Nagels, dass der Nagel aus einem korrosionsfesten Material, vorzugsweise Metall, Kunststoff oder Keramik besteht. Somit besteht auch hier das Risiko, dass bei einer späteren Weiterverarbeitung der Baumstämme metallische Teile im Baumstamm enthalten sind, die die eingesetzten Sägewerkzeuge beschädigen können.

Aus der DE 10 2016 007 093 A1 ist ein Nagel mit einem zweiteilig ausgebildeten Nagelkörper vorbekannt. Der Nagelkörper umfasst einen zylindrischen Hohlkörper, in den ein die Spitze bildender Schubstift eingesetzt ist. Zwischen dem Schubstift und dem Hohlkörper sind zwei ringförmige Hohlräume ausgebildet, in denen ein Trägermaterial mit einem Holzbehandlungswirkstoff eingebracht ist. Wenn der Nagelkörper aus einem hölzernen Material besteht, ist es zum Einbringen in einen Körper stets erforderlich, zunächst ein Loch in diesen vorzubohren und anschließend den Nagel in dieses einzubringen, was einen hohen Arbeitsaufwand bedeutet.

Der Erfindung liegt daher die Aufgabe zugrunde, einen möglichst universell einsetzbaren Nagel zum Einbringen von Gegenständen, insbesondere Sensoren in einem Körper so auszugestalten, dass die vorgenannten Nachteile vermieden werden.

Die Aufgabe ist bei einem Nagel der eingangs genannten Art dadurch gelöst, dass im Hohlraum des Nagelkörpers ein Sensor zur Erfassung von Zustandsgrößen, insbesondere ein Temperatursensor und/oder Feuchtigkeitssensor und/oder Drucksensor untergebracht ist.

Der Erfindung liegt somit die Überlegung zugrunde, einen Nagel zum Einbringen von Gegenständen in einen Körper so auszugestalten, dass der Nagelkörper aus einem Material besteht, welches eine hohe Ähnlichkeit zu dem Material des Körpers, beispielsweise einem Baumstamm oder einer Holzkiste oder Holzpalette aufweist. Dadurch kann ohne Gefahr das Holz weiterverarbeitet werden, da der Nagelkörper keine metallischen oder andere abrasive-Komponenten aufweist. Andererseits wird eine bioverträgliche Möglichkeit zur Verfügung gestellt, Gegenstände wie RFID-Transponder und/oder Sensoren rationell, das heißt ohne die Notwendigkeit, eine Bohrung vorher zu erstellen, in andere biologische oder pflanzliche Organismen, beispielsweise einen Baumstamm einzubringen. Der Nagel umfasst dabei insbesondere einen Hohlraum zum Einbringen von Gegenständen, Substanzen oder dergleichen in einen Körper. Prinzipiell ist es aber auch möglich, einen erfindungsgemäßen Nagel mit mehreren Hohlräumen zu versehen, wenn beispielsweise mehrere Gegenstände, Substanzen oder dergleichen in einen Körper eingebracht werden, insbesondere wenn diese nicht in Kontakt miteinander kommen dürfen.

Die Möglichkeit, einen solchen Nagel direkt mittels eines Setzgerätes, insbesondere eines Druckluftnaglers in den Körper einzutreiben, ohne dass eine vorherige Bohrung aufwändig hergestellt werden muss, kann sich aus der geometrischen Ausgestaltung des Nagelkörpers ergeben. Dabei kann der Spitzenwinkel der Nagelspitze größer als 40° sein, insbesondere im Bereich von 45° bis 60° liegen und bevorzugt 45° oder 60° betragen. In weiterer Ausgestaltung kann der Nagel an seinem der Nagelspitze gegenüberliegenden Kopfbereich unter einem Winkel von 90° zu seiner Schaftachse abgeschnitten sein. Durch eine derartige Ausgestaltung des Nagelkörpers kann gewährleistet werden, dass sich der Nagel durch ein entsprechendes Setzgerät, insbesondere einen Druckluftnagler in einen Körper eintreiben lässt, ohne dass zuvor eine Vorbohrung aufwendig gefertigt werden muss. Unter dem Begriff des Eintreibens versteht man grundsätzlich das direkte Einbringen eines Nagels in einen Körper, beispielsweise mit einem Druckluftnagler oder einem Hammer, ohne das vorherige Herstellen einer Vorbohrung in dem Körper.

In bevorzugter Ausführung besteht der Nagelkörper aus einem Holzwerkstoff, vorzugsweise einem verleimten Furnierschichtholz. Ein solcher Werkstoff weist je nach Art des Leims hohe Festigkeiten und einstellbare Quellwerte auf, und ist biologisch verträglich mit dem Material des Körpers, in den der Nagel eingebracht wird. Der Holzwerkstoff kann abhängig von der Verleimung unterschiedliche Mengen an Feuchtigkeit aufnehmen und dadurch quellen, so dass er über einen längeren Zeitraum mikrobiologisch abgebaut werden kann und sich somit umweltneutral verhält.

In einer weiteren Ausgestaltung der Erfindung weist der Schaft des Nagels einen kreisförmigen oder ovalen oder mehreckigen Querschnitt auf.

Es kann vorgesehen sein, dass in dem Schaft ein axiales den Hohlraum bildendes Sackloch ausgebildet ist, das von seiner der Spitze abgewandten Seite ausgehend sich insbesondere über mindestens 10 % der Länge des Schaftes erstreckt. Alternativ kann der Schaft ein quer zu seiner Längsachse angeordnetes den Hohlraum bildendes Loch, insbesondere Sackloch aufweisen. Das Sackloch kann dabei einen kreisförmigen Querschnitt oder eine andere Querschnittsform aufweisen.

Vorzugsweise ist das Sackloch durch mindestens ein in den Nagelkörper eingepresstes, eingeklebtes oder eingeschraubtes Verschlusselement oder durch ein aushärtendes Harz verschlossen.

Vorzugsweise ist vorgesehen, dass in dem im Nagelkörper ausgebildeten Hohlraum ein Objekt zur Identifizierung, insbesondere zur Identifizierung mittels elektromagnetischer Wellen, zusätzlich ein RFID-Transponder untergebracht ist. Im Hohlraum des Nagelkörpers ist erfindungsgemäß ein Sensor zur Erfassung von Zustandsgrößen, insbesondere ein Temperatursensor und/oder Feuchtigkeitssensor und/oder Drucksensor untergebracht.

Der erfindungsgemäße Nagel kann somit sehr universell eingesetzt werden, um einen Sensor zur Erfassung von Zustandsgrößen in einen Körper einzubringen. Der RFID-Transponder kann dabei zur eindeutigen Identifizierung des Körpers, beispielsweise eines Baumstamms dienen, während ein Sensor geeignet ist, die vorherrschenden Bedingungen kontinuierlich zu erfassen.

In dem Hohlraum kann wenigstens eine Vorrichtung zur Spannungs- oder Stromversorgung des Sensors, insbesondere eine Batterieeinheit untergebracht sein. Eine derartige Spannungs- oder Stromversorgung ist erforderlich, damit ein vom Stromnetz unabhängiger Sensor über einen längeren Zeitraum funktionieren kann. Die Vorrichtung zur Spannungs- oder Stromversorgung des Sensors kann beispielsweise in an sich bekannter Weise Einweg-Batterien oder wiederaufladbare Akkus, beispielsweise Lithium-lonen-Akkus umfassen.

In dem Hohlraum kann ferner eine Vorrichtung zur Datenübertragung untergebracht sein, welche mit dem mindestens einen Sensor gekoppelt und ausgebildet ist, vom Sensor erfasste Messdaten zu übertragen, wobei die Vorrichtung zur Datenübertragung insbesondere zur Verwendung in einem drahtlosen Netzwerk, bevorzugt dem Mobilfunknetz und/oder zur Verbindung mit dem Internet geeignet ist. Eine derartige Vorrichtung zur Datenübertragung ist erforderlich, um insbesondere bei größeren zusammenhängenden Waldgebieten die vom Sensor erfassten Messwerte direkt übertragen zu können. Die Übertragung kann dabei über das Mobilfunknetz erfolgen, wodurch eine sichere Erfassung von Daten auch leitungsunabhängig und ohne zeitlichen Verzug gewährleistet werden kann. Wird beispielsweise die Temperatur von Baumstämmen überwacht, um Waldbrände schnell erkennen zu können, so wird durch die Übertragung über das Mobilfunknetz und/oder über eine Verbindung mit dem Internet eine Erkennung von Waldbränden ohne nennenswerten zeitlichen Verzug ermöglicht. Grundsätzlich möglich ist auch eine drahtlose Vernetzung von mehreren in verschiedenen Baumstämmen eingebrachter Sensoren, bzw. deren Vorrichtungen zur Datenübertragung untereinander.

Der Sensor kann dabei integral aufgebaut sein, so dass der Sensor, die Vorrichtung zur Spannungs- oder Stromversorgung und/oder die Vorrichtung zur Datenübertragung in einem Bauteil zusammengefasst sind. Alternativ ist es auch denkbar, dass es sich jeweils um separate Bauteile handelt, die über eine Verkabelung im Hohlraum des Nagelkörpers miteinander verbunden sind.

Prinzipiell ist es auch möglich, ergänzend oder alternativ zu einer Vorrichtung zur Datenübertragung eine Speichereinheit vorzusehen, welche die vom Sensor erfassten Messwerte speichert und bei Bedarf kontaktlos oder kabelgebunden durch ein geeignetes Lesegerät ausgelesen werden kann.

Ferner können im Hohlraum Gegenstände, Substanzen oder dergleichen mindestens teilweise biologischer Natur angeordnet sein und insbesondere Insekteneier und/oder Insektenlarven, Pflanzensamen und/oder Pflanzengewebe, Pilzsporen und/oder Pilzmyzel, Bakterien und/oder Viren beinhalten, wobei diese bevorzugt eine biologische und/oder chemische Substanz, insbesondere eine flüssige Substanz umfassen. Somit ist der erfindungsgemäße Nagel noch universeller einsetzbar, wenn zusätzlich zu einem Sensor noch die Möglichkeit besteht, Gegenstände oder Substanzen biologischer Natur in einen Körper, insbesondere einen Baumstamm einzubringen.

Alternativ oder ergänzend zu einer im Hohlraum des Nagelkörpers angeordneten Substanz kann der Nagel auch eine chemische und/oder biologische Substanz umfassen, welche in dem Nagelkörper gelöst ist. Das bedeutet, dass eine Substanz nicht vom Hohlraum den zumindest überwiegend aus verholztem Pflanzenmaterial bestehenden Nagelkörper nach außen durchdringen muss, sondern in dem verholzten Pflanzenmaterial bereits gelöst sein kann und dadurch nach dem Eintreiben in einen Körper, insbesondere einem Baumstamm, von dem Nagelkörper in diesen austreten und ihre beabsichtigte Wirkung entfalten kann.

In weiterer Ausgestaltung der Erfindung ist vorgesehen, dass in dem Hohlraum darüber hinaus ein Hilfsstoff angeordnet ist. Der Hilfsstoff kann dabei radial und/oder axial zwischen den Gegenständen, Substanzen oder der Gleichen und der Wandung des Hohlraums angeordnet sein und/oder diese Gegenstände, Substanzen oder dergleichen teilweise oder vollständig umhüllen. Der Hilfsstoff kann ein ruckdämpfendes granulares, faserförmiges und/oder geschäumtes Dämmmaterial und/oder eine elastische Dichtungsmasse, insbesondere als synthetischer oder natürlicher Kautschuk, Silikon, Polyurethan oder Acrylat aufweisen oder daraus gebildet sein.

Ein solcher ruckdämpfender Hilfsstoff ist insbesondere vor dem Hintergrund hilfreich, dass beim Einbringen des Nagels eine schlagartige Druckkraft in axialer Richtung auf diesen ausgeübt wird, wodurch eine ruckartige Bewegung hervorgerufen wird. Dadurch wäre es möglich, dass die im Hohlraum angeordneten Gegenstände, Substanzen oder dergleichen aufgrund ihrer Massenträgheit gegen die Wandung des Hohlraums schlagen und somit beschädigt werden. Ein ruckdämpfender Hilfsstoff führt dazu, dass diese ruckartige Bewegung abgedämpft wird, was insbesondere die Zuverlässigkeit von RFID-Transpondern und/oder Sensoren, die zumeist empfindlich auf ruckartige Beanspruchung reagieren, verbessert.

Der Hilfsstoff kann ferner wachstumsfördernde oder wachstumshemmende Komponenten, insbesondere Nährstoffe oder Gifte enthalten und/oder biologisch abbaubar ausgestaltet sein.

Beim Einbringen von Insekteneiern und/oder -larven in den Hohlraum ist es erforderlich, Nährstoffe vorzusehen, die ein Wachstum der Insektenlarven ermöglichen. Darüber hinaus kann es erforderlich sein, beispielsweise bei chemischen Substanzen, diese in einen Hilfsstoff einzubetten, der dann zur Freigabe der chemischen Substanz an die Umgebung beiträgt. Er kann biologisch abbaubar ausgestaltet sein.

Sollen Pilzmyzel oder Pilzsporen beispielsweise in den Körper eingebracht werden, so bietet es sich an, einen Nagel aus trockenem Vollholz oder verdichtetem und trockenem Vollholz einzusetzen, da dieser Feuchtigkeit aus seiner Umgebung aufnehmen kann, die er an die eingeschlossenen Gegenstände, Substanzen oder dergleichen weitergeben kann. Handelt es sich dabei beispielsweise um Pilzsporen oder Pilzmyzel, so ermöglicht die eindringende Feuchtigkeit deren Wachstum, welches durch zusätzliche Nährsubstrate, die als Hilfsstoffe beigegeben werden können, noch unterstützt werden kann.

Ein erfindungsgemäßer Nagel wird vorzugsweise zum Einbringen mindestens einem Sensors in einen überwiegend aus einem pflanzlichen Material, insbesondere einem Holzwerkstoff bestehenden Körper und/oder zum Verbinden mehrerer derartiger Körper verwendet. Er kann in einen Baumstamm eingebracht werden, aber auch als Verbindungselement beispielsweise bei der Herstellung von Holzpaletten oder Holzkisten eingesetzt werden. Eine solche Holzpalette oder -kiste verfügt dann beispielsweise direkt über einen RFID-Transponder, der es ermöglicht, sie eindeutig zu identifizieren. Der Nagel übernimmt somit sowohl eine Transportfunktion, als auch eine Befestigungsfunktion. Ferner können durch einen mit einem entsprechenden Sensor ausgestatteten Nagel die Umgebungsbedingungen kontinuierlich überwacht werden, wenn beispielsweise empfindliches Frachtgut wie Lebensmittel transportiert wird.

Die Erfindung umfasst darüber hinaus ein Verfahren nach Anspruch 13.

Alternativ zum bereits zuvor beschriebenen Eintreiben eines Nagels mittels eines Druckluftnaglers kann ein erfindungsgemäßer Nagel somit auch manuell mittels eines Hammers in den Körper eingetrieben werden.

Unabhängig davon, ob der erfindungsgemäße Nagel durch einen Druckluftnagler oder manuell mittels eines Hammers in den Körper eingetrieben wird, ist das Herstellen einer Bohrung zuvor nicht erforderlich, da der Nagelkörper so ausgebildet ist, dass er zum Eintreiben in einen Körper geeignet ist.

Weitere optionale Merkmale dieses Verfahrens sind in den abhängigen Ansprüchen 14 und 15 beschrieben.

Für die Ausgestaltung der Erfindung wird des Weiteren auf die Unteransprüche sowie auf das in der Zeichnung dargestellte Ausführungsbeispiel verwiesen.

In der Zeichnung zeigt:
- Figur 1: eine Längsschnittansicht eines Nagel, der nicht Teil des beanspruchten Gegenstands ist, sondern nur zu Illustrationszwecken dargestellt wird.
- Figur 2: eine Längsschnittansicht eines Nagels in alternativer Ausgestaltung; Diese Ausgestaltung ist nicht Teil des beanspruchten Gegenstands ist, sondern nur zu Illustrationszwecken dargestellt wird.
- Figur 3: eine Längsschnittansicht des in Figur 2 dargestellten Nagels mit einer um 90° um die Längsachse gedrehten Schnittebene;
- Figur 4: eine Längsschnittansicht eines erfindungsgemäßen Nagels in einer weiteren alternativen Ausgestaltung.

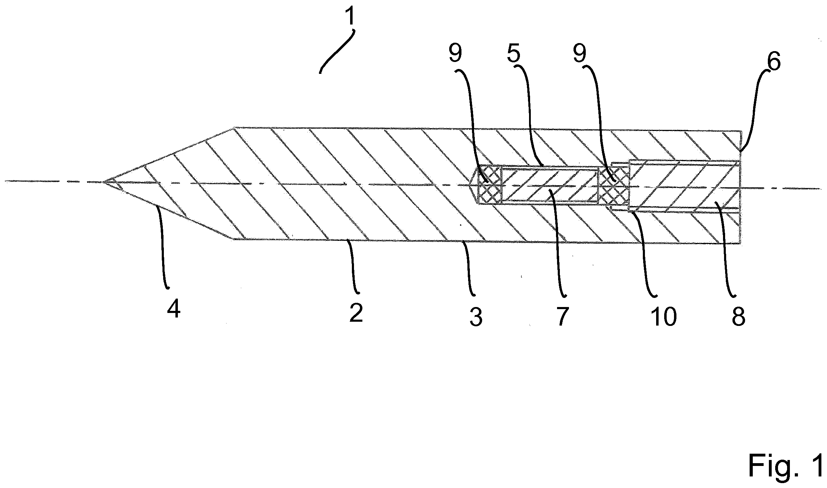

In der Figur 1 ist ein Nagel 1 zum Einbringen von Gegenständen, Substanzen oder dergleichen in einen nicht dargestellten Körper abgebildet. Der Nagel 1 umfasst einen Nagelkörper 2 mit einem Schaft 3, der einen kreisförmigen Querschnitt aufweist, und einer an dem einen Ende des Schaftes 3 als Rundspitze ausgebildeten Spitze 4, deren Spitzenwinkel etwa 45° beträgt. Der Nagelkörper 2 besteht überwiegend aus einem verholzten Pflanzenmaterial, in diesem Fall aus einem verleimten Furnierschichtholz.

Der Schaft 3 weist einen kreisförmigen Querschnitt auf. Der Nagelkörper 2 besitzt ein axiales Sackloch 5, das von der der Spitze abgewandten Stirnseite 6 ausgehend sich über etwa 50% der Länge des Schaftes 3 erstreckt und den Hohlraum zur Unterbringung von Gegenständen, Substanzen oder dergleichen bildet. Darin ist ein RFID-Transponder 7 angeordnet. Das axiale Sackloch 5 ist durch ein in den Nagelkörper 2 eingeschraubtes Verschlusselement 8 verschlossen. Zwischen dem RFID-Transponder 7 und der Stirnwandung des axialen Sacklochs 6 sowie zwischen dem RFID-Transponder 7 und dem Verschlusselement 8 ist ein ruckdämpfender Hilfsstoff 9 angeordnet, der aus einem natürlichen Kautschuk gebildet ist und biologisch abbaubar ist.

Es ist vorgesehen, den in der Figur 1 dargestellten Nagel in einen überwiegend aus einem pflanzlichen Material bestehenden Körper, beispielsweise einen Baumstamm oder ein Werkstück aus Holz einzubringen. Dazu wird der Nagel 1 bereitgestellt und mittels eines Setzgerätes, beispielsweise eines Druckluftnaglers oder Hammers in den Baumstamm oder das Werkstück eingetrieben.

Zum Bereitstellen des Nagels 1 wird von dem Nagelkörper 2 mit seinem Schaft 3 und seiner Spitze 4 sowie seinem axialen Sackloch 5 ausgegangen. Anschließend wird ein Teil des ruckdämpfenden Hilfsstoffes 9 in den Endbereich des axialen Sacklochs 5 eingebracht. Daraufhin wird der RFID-Transponder 7 in das Sackloch 5 eingesetzt, so dass seine vordere Stirnseite sich mit dem bereits eingesetzten ruckdämpfenden Hilfsstoff 9 in Kontakt befindet. Anschließend wird weiterer Hilfsstoff 9 in das axiale Sackloch 5 eingebracht, bevor das Verschlusselement 8 in das in dem Sackloch 5 ausgebildete Innengewinde 10 eingeschraubt wird und das Sackloch 5 somit verschlossen wird.

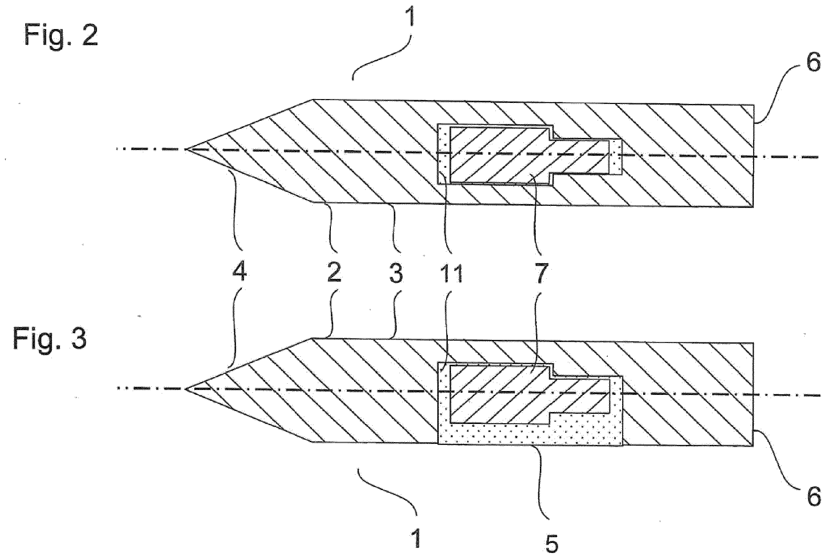

In Figur 2 und Figur 3 ist ein Nagel 1 zum Einbringen von Gegenständen, Substanzen oder dergleichen in einer alternativen Ausgestaltung abgebildet. Dieser besitzt abweichend von dem in Figur 1 dargestellten Nagel 1 ein quer zur Längsachse des Nagelkörpers 2 angeordnetes Sackloch 5, in welchem ein RFID-Transponder 7 in Harz 11 eingebettet ist, so dass dieses den RFID-Transponder 7 vollständig umhüllt.

Zur Bereitstellung des in Figur 2 und Figur 3 dargestellten Nagels 1 wird zunächst ein Teil des Harzes 11 in das Sackloch 5 gepresst, bevor der RFID-Transponder 7 in das Sackloch 5 auf das Harz 11 eingesetzt wird. Anschließend wird der noch offene Raum des Sacklochs 5 mit Harz 11 aufgefüllt, bevor dieses aushärtet.

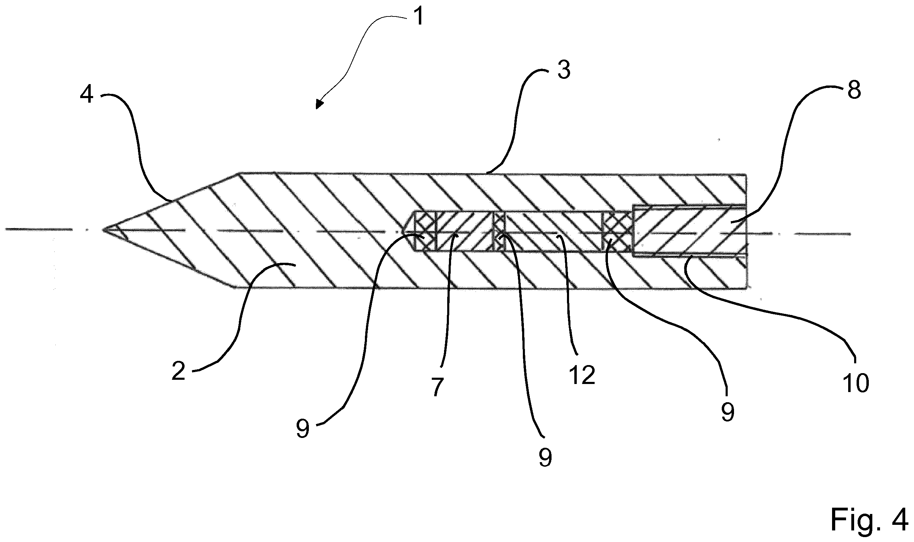

In Figur 4 ist ein erfindungsgemäßer Nagel 1 zum Einbringen eines RFID-Transponders und eines Temperatursensors in einer weiteren alternativen Ausgestaltung abgebildet. Dessen Nagelkörper 2 ist ähnlich wie bei dem in Figur 1 dargestellten Nagel 1 ausgestaltet und besitzt ein axiales Sackloch 5, das von der der Spitze abgewandten Stirnseite 6 ausgehend sich über etwa 60 % der Länge des Schaftes 3 erstreckt und den Hohlraum zur Unterbringung eines RFID-Transponders 7 und eines Temperatursensors 12 bildet. Der Temperatursensor 12 ist dabei integral mit einer Batterieeinheit und einer Vorrichtung zur Datenübertragung über das Mobilfunknetz ausgestattet, sodass durch den Sensor 12 erfasste Temperaturdaten unmittelbar ohne Zeitverzug an einen Empfänger übertragen werden.

In axialer Richtung ist zwischen dem Verschlusselement 8 und dem Sensor 12, zwischen dem Sensor 12 und dem RFID-Transponder 7, sowie zwischen dem RFID-Transponder 7 und dem Ende des axialen Sacklochs 5 jeweils ein ruckdämpfender Hilfsstoff 9 angeordnet, um beim Eintreiben des Nagels 1 in einen Körper die Stoßbeanspruchung auf den RFID-Transponder 7 und den Sensor 12 zu minimieren.

Der in Figur 4 dargestellte Nagel 1 wird hergestellt, indem nacheinander der RFID-Transponder 7 und der Sensor 12, sowie die Abschnitte des Hilfsstoffes 9 in das Sackloch 5 eingebracht werden und dieses anschließend mittels des Verschlusselements 8 verschlossen wird. Der so hergestellte Nagel 1 kann durch ein Nagelsetzgerät, insbesondere einen Druckluftnagler direkt in einen Körper, beispielsweise einen Baumstamm eingetrieben werden, ohne dass zuvor das Herstellen einer Vorbohrung erforderlich ist.

Der in dem Nagel 1 enthaltene RFID-Transponder 7 gewährleistet einerseits die eindeutige Identifizierung des Baumstamms, andererseits ermöglicht der Temperatursensor 12 mit seiner Vorrichtung zur Datenübertragung das frühzeitige Erkennen von Waldbränden, wenn die gemessene Temperatur ansteigt.

### Bezugszeichenliste

- 1: Nagel
- 2: Nagelkörper
- 3: Schaft
- 4: Spitze
- 5: Sackloch
- 6: Stirnseite
- 7: RFID-Transponder
- 8: Verschlusselement
- 9: ruckdämpfender Hilfsstoff
- 10: Innengewinde
- 11: Harz
- 12: Sensor

## Patentansprüche

1. Nagel (1) zum Einbringen von Gegenständen, Substanzen oder dergleichen in einen Körper mit
einem Nagelkörper (2), der
einen Schaft (3) und
eine Spitze (4) umfasst, die an einem Ende des Schaftes (3) ausgebildet ist,
wobei der Nagelkörper (2) mindestens einen, insbesondere genau einen Hohlraum zur Unterbringung von mindestens einem RFID-Transponder (7) und/oder mindestens einem Sensor (12) aufweist,
**wobei**,
der Nagelkörper (2) überwiegend oder vollständig aus verholztem Pflanzenmaterial besteht und so ausgebildet ist, dass er zum Eintreiben in einen Körper mittels eines Setzgerätes, insbesondere eines Druckluftnaglers geeignet ist,
**dadurch gekennzeichnet, dass** im Hohlraum des Nagelkörpers (2) ein Sensor (12) zur Erfassung von Zustandsgrößen, inbesondere ein Temperatursensor und/oder Feuchtigkeitssensor und/oder Drucksensor untergebracht ist.

2. Nagel (1) nach Anspruch 1, **dadurch gekennzeichnet, dass** der Nagelkörper (2) aus einem Holzwerkstoff, vorzugsweise einem verleimten Furnierschichtholz besteht.

3. Nagel (1) nach Anspruch 1 oder 2, **dadurch gekennzeichnet, dass** dieser eine chemische und/oder biologische Substanz umfasst, welche in dem Nagelkörper (2) gelöst ist.

4. Nagel (1) nach einem der Ansprüche 1 bis 3, **dadurch gekennzeichnet, dass** der Schaft (3) einen kreisförmigen oder ovalen oder mehreckigen Querschnitt aufweist.

5. Nagel (1) nach einem der vorherigen Ansprüche, **dadurch gekennzeichnet, dass** in dem Schaft (3) ein axiales Sackloch (5) ausgebildet ist, das von der der Spitze (4) abgewandten Stirnseite (6) ausgehend sich insbesondere über mindestens 10% der Länge des Schaftes (3) erstreckt und den Hohlraum bildet.

6. Nagel (1) nach einem der Ansprüche 1 bis 4, **dadurch gekennzeichnet, dass** in dem Schaft (3) ein quer zu seiner Längsachse angeordnetes Loch, insbesondere Sackloch (5) ausgebildet ist, das den Hohlraum bildet.

7. Nagel (1) nach einem der Ansprüche 5 oder 6, **dadurch gekennzeichnet, dass** das Sackloch (5) durch ein in den Nagelkörper (2) eingepresstes, eingeklebtes oder eingeschraubtes Verschlusselement (8) oder durch ein aushärtendes Harz verschlossen ist.

8. Nagel (1) nach einem der vorherigen Ansprüche, **dadurch gekennzeichnet, dass** in dem Hohlraum des Nagelkörpers (2) ein Objekt zur Identifizierung, insbesondere zur Identifizierung mittels elektromagnetischer Wellen, vorzugsweise ein RFID-Transponder (7) untergebracht ist.

9. Nagel (1) nach einem der vorherigen Ansprüche, **dadurch gekennzeichnet, dass** in dem Hohlraum wenigstens eine Vorrichtung zur Spannungs- oder Stromversorgung des Sensors (12), insbesondere eine Batterieeinheit untergebracht ist, und/oder dass in dem Hohlraum eine Vorrichtung zur Datenübertragung untergebracht ist, welche mit dem mindestens einen Sensor (12) gekoppelt und ausgebildet ist, vom Sensor (12) erfasste Messdaten zu übertragen, wobei die Vorrichtung zur Datenübertragung insbesondere zur Verwendung in einem drahtlosen Netzwerk, bevorzugt dem Mobilfunknetz, und/oder zur Verbindung mit dem Internet geeignet ist.

10. Nagel (1) nach einem der vorherigen Ansprüche, **dadurch gekennzeichnet, dass** in dem Hohlraum ferner Gegenstände, Substanzen oder dergleichen mindestens teilweise biologischer Natur angeordnet sind und insbesondere Insekteneier und/oder Insektenlarven, Pflanzensamen und/oder Pflanzengewebe, Pilzsporen und/oder Pilzmyzel, Bakterien und/oder Viren beinhalten, wobei diese bevorzugt eine biologische und/oder chemische Substanz, insbesondere eine flüssige Substanz umfassen.

11. Nagel (1) nach einem der vorherigen Ansprüche, **dadurch gekennzeichnet, dass** in dem Hohlraum ferner ein Hilfsstoff (9) angeordnet ist, wobei der Hilfsstoff (9) radial und/oder axial zwischen den Gegenständen, Substanzen oder dergleichen und der Wandung des Hohlraums angeordnet ist und/oder diese teilweise oder vollständig umhüllt und/oder ein ruckdämpfendes granuläres, faserförmiges und/oder geschäumtes Dämmmaterial und/oder eine elastische Dichtungsmasse, insbesondere als synthetischer oder natürlicher Kautschuk, Silicon, Polyurethan oder Acrylat aufweist oder daraus gebildet ist, und/oder wachstumsfördernde oder wachstumshemmende Komponenten, insbesondere Nährstoffe oder Gifte enthält, und/oder biologisch abbaubar ist.

12. Verwendung eines Nagels (1) nach einem der vorherigen Ansprüche zum Einbringen mindestens eines Sensors (12) in einen überwiegend aus einem pflanzlichen Material, insbesondere einem Holzwerkstoff bestehenden Körper und/oder zum Verbinden mehrerer derartiger Körper.

13. Verfahren zum Einbringen mindestens eines Sensors (12) in einen Körper, umfassend die folgenden Schritte:
Bereitstellen eines Nagels (1) nach einem der vorherigen Ansprüche 1-11, Eintreiben des Nagels (1) mittels eines Setzgerätes, insbesondere eines Druckluftnaglers oder Hammers oder mittels Vibrationen in den Körper.

14. Verfahren nach Anspruch 13, **dadurch gekennzeichnet, dass** das Bereitstellen eines Nagels (1) mindestens folgende Schritte umfasst:
Bereitstellen eines Nagelkörpers (2) mit einem Schaft (3) und einer Spitze (4), sowie einem axialen oder quer zur Längsachse angeordneten Sackloch (5);
Einbringen mindestens eines Sensors (12) zur Erfassung von Zustandgrösse in das Sackloch (5);
Verschließen des Sacklochs (5) durch Einpressen, Einkleben oder Einschrauben eines Verschlusselements (8) oder durch Aushärten eines Harzes,
wobei insbesondere ferner in das Sackloch (5) ein ruckdämpfender und/oder wachstumsfördernder oder wachstumshemmender, insbesondere Nährstoffe oder Gifte enthaltender Hilfsstoff (9) eingebracht wird.

15. Verfahren nach Anspruch 14, **dadurch gekennzeichnet, dass** ferner ein RFID-Transponder in das Sackloch eingedeckt wird.

## Claims

1. Nail (1) for inserting objects, substances or the like into a body having
a nail body (2) comprising
a shank (3) and
a tip (4) formed at one end of the shank (3),
wherein the nail body (2) has at least one, in particular exactly one, cavity for accommodating at least one RFID transponder (7) and/or at least one sensor (12), wherein
the nail body (2) consists predominantly or entirely of lignified plant material and is designed in such a way that it is suitable for driving into a body by means of a setting device, in particular a pneumatic nailer **characterized in that** a sensor (12) for detecting state variables, in particular a temperature sensor and/or moisture sensor and/or pressure sensor, is accommodated in the cavity of the nail body (2).

2. Nail (1) according to claim 1, **characterized in that** the nail body (2) consists of a wood material, preferably a glued laminated veneer lumber.

3. Nail (1) according to claim 1 or 2, **characterized in that** it comprises a chemical and/or biological substance which is dissolved in the nail body (2).

4. Nail (1) according to one of claims 1 to 3, **characterized in that** the shank (3) has a circular or oval or polygonal cross-section.

5. Nail (1) according to one of the previous claims, **characterized in that** an axial blind hole (5) is formed in the shank (3), which, starting from the end face (6) facing away from the tip (4), extends in particular over at least 10% of the length of the shank (3) and forms the cavity.

6. Nail (1) according to one of claims 1 to 4, **characterized in that** a hole, in particular a blind hole (5), is formed in the shank (3) transversely to its longitudinal axis and forms the cavity.

7. Nail (1) according to one of claims 5 or 6, **characterized in that** the blind hole (5) is closed by a closing element (8) pressed, glued or screwed into the nail body (2) or by a curing resin.

8. Nail (1) according to one of the previous claims, **characterized in that** an object for identification, in particular for identification by means of electromagnetic waves, preferably an RFID transponder (7), is accommodated in the cavity of the nail body (2).

9. Nail (1) according to one of the previous claims, **characterized in that** at least one device for supplying voltage or power to the sensor (12), in particular a battery unit, is accommodated in the cavity, and/or **in that** a device for data transmission is accommodated in the cavity, which device is coupled to the at least one sensor (12) and is designed to transmit measurement data detected by the sensor (12), the device for data transmission being suitable in particular for use in a wireless network, preferably the mobile radio network, and/or for connection to the Internet.

10. Nail (1) according to any one of the previous claims, **characterized in that** objects, substances or the like of at least partly biological nature are further arranged in the cavity and in particular include insect eggs and/or insect larvae, plant seeds and/or plant tissue, fungal spores and/or fungal mycelium, bacteria and/or viruses, preferably comprising a biological and/or chemical substance, in particular a liquid substance.

11. Nail (1) according to any one of the previous claims, **characterized in that** an auxiliary material (9) is further arranged in the cavity, said auxiliary material (9) being arranged radially and/or axially between the objects, substances or the like and the wall of the cavity and/or partially or completely enveloping the latter and/or comprising a shock-absorbing granular, fibrous and/or foamed insulating material and/or an elastic sealing compound, in particular as synthetic or natural rubber, silicone, polyurethane or acrylate, and/or contains growth-promoting or growth-inhibiting components, in particular nutrients or poisons, and/or is biodegradable.

12. Use of a nail (1) according to any one of the previous claims for inserting at least one sensor (12) into a body consisting predominantly of a plant material, in particular a wood material, and/or for connecting several such bodies.

13. Method for inserting at least oneone sensor (12) into a body, comprising the following steps:
providing a nail (1) according to any one of the previous claims 1 to 11,
driving the nail (1) into the body by means of a setting device, in particular a pneumatic nailer or hammer or by means of vibrations.

14. Method according to claim 13, **characterized in that** providing a nail (1) comprises at least the following steps:
providing a nail body (2) having a shank (3) and a tip (4), and an axial or transverse blind hole (5);
inserting at least one sensor (12) for detecting state variables into the blind hole (5);
closing the blind hole (5) by pressing in, gluing in or screwing in a closing element (8) or by curing a resin,
wherein, in particular, an auxiliary substance (9) which dampens jerk and/or promotes or inhibits growth, in particular contains nutrients or poisons, is further introduced into the blind hole (5).

15. Method according to claim 14, **characterized in that** further an RFID-transponder is inserted into the blind hole.

## Revendications

1. Clou (1) pour l'introduction d'objets, de substances ou analogues dans un corps avec
un corps de clou (2) qui présente
une tige (3) et
une pointe (4) formée à une extrémité de la tige (3),
le corps de clou (2) présentant au moins un espace creux, en particulier exactement un espace creux pour loger au moins un transpondeur RFID (7) et/ou au moins un capteur (12),
le corps de clou (2) se composant principalement ou entièrement de matériau végétal lignifié et étant conçu de telle sorte qu'il convient à l'enfoncement dans un corps au moyen d'un appareil de pose, en particulier d'un cloueur à air comprimé, **caractérisé en ce qu'un** capteur (12) destiné à détecter des grandeurs d'état, en particulier un capteur de température et/ou un capteur d'humidité et/ou un capteur de pression, est logé dans la cavité du corps de clou (2).

2. Clou (1) selon la revendication 1, **caractérisé en ce que** le corps du clou (2) est constitué d'un matériau à base de bois, de préférence d'un bois de placage stratifié et collé.

3. Clou (1) selon la revendication 1 ou 2, **caractérisé en ce qu'il** comprend une substance chimique et/ou biologique qui est dissoute dans le corps du clou (2).

4. Clou (1) selon l'une des revendications 1 à 3, **caractérisé en ce que** la tige (3) présente une section transversale circulaire ou ovale ou polygonale.

5. Clou (1) selon l'une des revendications précédentes, **caractérisé en ce qu'un** trou borgne axial (5) est formé dans la tige (3), lequel s'étend à partir de la face frontale (6) opposée à la pointe (4), en particulier sur au moins 10% de la longueur de la tige (3), et forme l'espace creux.

6. Clou (1) selon l'une des revendications 1 à 4, **caractérisé en ce qu'un** trou, en particulier un trou borgne (5), disposé transversalement à son axe longitudinal, est formé dans la tige (3) et constitue l'espace creux.

7. Clou (1) selon l'une des revendications 5 ou 6, **caractérisé en ce que** le trou borgne (5) est fermé par un élément de fermeture (8) enfoncé, collé ou vissé dans le corps du clou (2) ou par une résine durcissante.

8. Clou (1) selon l'une des revendications précédentes, **caractérisé en ce qu'un** objet d'identification, notamment d'identification par ondes électromagnétiques, de préférence un transpondeur RFID (7), est logé dans la cavité du corps de clou (2).

9. Clou (1) selon l'une des revendictions précédentes, , **caractérisé en ce qu'au** moins un dispositif d'alimentation en tension ou en courant du capteur (12), en particulier une unité de batterie, est logé dans la cavité, et/ou **en ce qu'**un dispositif de transmission de données est logé dans la cavité, lequel est couplé à l'au moins un capteur (12) et est conçu pour transmettre des données de mesure saisies par le capteur (12), le dispositif de transmission de données étant en particulier adapté à une utilisation dans un réseau sans fil, de préférence le réseau de téléphonie mobile, et/ou à une connexion à Internet.

10. Clou (1) selon l'une des revendictions précédentes, **caractérisé en ce que** dans la cavité sont en outre disposés des objets, substances ou analogues de nature au moins partiellement biologique et contenant notamment des oeufs d'insectes et/ou des larves d'insectes, des graines de plantes et/ou des tissus végétaux, des spores de champignons et/ou du mycélium de champignons, des bactéries et/ou des virus, ceux-ci comprenant de préférence une substance biologique et/ou chimique, notamment une substance liquide.

11. Clou (1) selon l'une des revendictions précédentes, **caractérisé en ce qu'un** matériau auxiliaire (9) est en outre disposé dans l'espace creux, le matériau auxiliaire (9) étant disposé radialement et/ou axialement entre les objets, substances ou similaires et la paroi de l'espace creux et/ou enveloppant partiellement ou complètement celle-ci et/ou contenant un matériau granulaire amortissant les secousses, matériau isolant fibreux et/ou expansé et/ou une masse d'étanchéité élastique, en particulier sous forme de caoutchouc synthétique ou naturel, de silicone, de polyuréthane ou d'acrylate, ou est formé à partir de ceux-ci, et/ou contient des composants favorisant ou empêchant la croissance, en particulier des substances nutritives ou des poisons, et/ou est biodégradable.

12. Utilisation d'un clou (1) selon l'une des revendictions précédentes pour l'insertion d'auun capteur (12) dans un corps constitué principalement d'un matériau végétal, notamment d'un matériau à base de bois, et/ou pour l'assemblage de plusieurs corps de ce type.

13. Procédé pour insérer au moins un capteur (12) dans un corps, comprenant les étapes suivantes :
fournir un clou (1) selon l'une quelconque des revendications 1 à 11,
enfoncement du clou (1) dans le corps au moyen d'un outil de pose, notamment une cloueuse ou un marteau pneumatique, ou au moyen de vibrations.

14. Procédé selon la revendication 13, **caractérisé en ce que** la fourniture d'un clou (1) comprend au moins les étapes suivantes :
mise à disposition d'un corps de clou (2) avec une tige (3) et une pointe (4), ainsi qu'un trou borgne (5) disposé axialement ou transversalement à l'axe longitudinal ;
mise en place d'au moins un capteur destine à détecter des grandeur's d'-état, dans le trou borgne (5) ;
fermeture du trou borgne (5) par enfoncement, collage ou vissage d'un élément de fermeture (8) ou par durcissement d'une résine,
un adjuvant (9) amortissant les secousses et/ou favorisant ou inhibant la croissance, en particulier contenant des substances nutritives ou des poisons, étant en particulier introduit dans le trou borgne (5).

15. Méthode selon la revendication 14, **caractérisée par** l'insertion d'un transpondeur RFID dans le trou borgne.
